# EUROPEAN PATENT APPLICATION

(11) **EP 1 923 643 A2**
(43) Date of publication of application: **21.05.2008**
(21) Application number: 07254368.9
(22) Date of filing: 05.11.2007
(51) Int. Cl.: F24F 12/00

(54) **A building system**

(30) Priority: 16.11.2006 GB 0622926
(71) Applicant: Polypipe Building Products Ltd., Edlington, Doncaster DN12 1ES (GB)
(72) Inventor: Bennett, Marcus, Sprotborough Doncaster DN5 7AA (GB); Hill, Jon, Biggleswade Bedfordshire SG18 8QQ (GB); Raynor, David, Oughtibridge Sheffield S35 0FD (GB)
(74) Representative: Johnson, Terence Leslie

(57) **Abstract**

There is shown a heating, cooling and ventilation system 1 installed in a building such as a house (2) and characterised by a ventilation device (12) adapted to handle ambient air from outside the building, by ducting (15), (18) between the heating apparatus (11) and the ventilation device (12), and by the arrangement being such that the ventilation device (12) communicates air from outside the building through the ducting (15), (18) so that air is communicated around the building to one or more rooms (3, 4) for heating or cooling the or each room (3, 4).

## Description

The invention relates to a building system, and particularly to a heating and ventilating system for a building.

Buildings such as domestic dwellings, for example houses, often have to be heated during cold weather, particularly during winter and cooled during hot weather, for example during summer months. However, in order to achieve both heating and cooling, a heating system is usually turned off during hotter weather, so lies idle, and separate cooling units such as stand alone or individual air conditioners, or fans, have to be employed, which is an expensive option both financially and in utilisation of space.

It is accordingly an object of the invention to seek to mitigate this disadvantage.

According to a first aspect of the invention there is provided a heating, cooling and ventilating system for a building, comprising heating apparatus installed at a substrate, characterised by a ventilation device adapted to handle ambient air from outside the building, by ducting between the heating apparatus and the ventilation device, and by the arrangement being such that the ventilation device communicates air from outside the building through the ducting so that air is communicated around the building to one or more rooms for heating or cooling the or each room.

Using the invention it is therefore possible to provide an integrated heating, cooling and ventilation system. Using such a system, there is only one installation in a building which by use of appropriate controls can provide heating, cooling and ventilation as desired.

The substrate may comprise a floor and the heating apparatus may comprise a radiant floor heating system.

The floor may comprise a base floor of the building, for example a screeded solid floor and the radiant floor heating system may comprise pipes for passage of water laid in a screeded floor, or laid on a floor such as in an overlay floor system.

Preferably the pipes may comprise flexible plastic hot water pipes, though any other suitable materials may be used, e.g. copper pipes.

Alternatively, the radiant floor heating system may comprise an electrical tile heating system.

The ventilation device may comprise a mechanical ventilation unit mounted in an upper part of the building, for example in a loft, any other roof space or the space between a suspended ceiling and a roof of the building. Moreover the ventilation device may comprise heat recovery means, such as a heat exchanger.

There may be passage means connecting the ventilation device with ambient air, part of the passage means being for admitting ambient air to the ventilation device and part of the passage means being for expelling air to ambient atmosphere after being handled by the device. This is a relatively simple construction and is adapted to draw fresh air in and to expel stale air outside the building after any residual heat is recovered from it via a heat exchanger.

The ducting may be at one or more walls of the building and may provide an air flow connection between the heating apparatus and ventilation device.

Suitably, the ducting may be mounted at or in the walls of the building, or may be recessed behind the walls of the building.

The ducting may comprise a sound absorbing material. This provides for a relatively silent operation. Also, the ducting can be of any desired shape in cross-section, e.g. rectangular or square, and may be rigid or flexible.

Also, the ducting may comprise one or more grilles adapted to act as air intakes and outlets, suitably the or each grille being mounted in a skirting board or wall or floor of the building. Alternatively, the ducting may comprise a slot extending substantially over the length of the skirting board and adapted to direct air flow across the full width of the floor. This construction provides for laminar air flow across the floor surface The ducting may be insulated to seek to obviate heat loss.

The ducting may also comprise part of partitioning forming a wall.

The system may include a heat pump adapted to provide additional heating.

According to a second aspect of the invention, there is provided a building, incorporating a heating and ventilating system as hereinbefore defined.

It will be understood that in a building incorporating a system embodying the invention, the ducting is fitted from room(s) below to draw air from the room(s) below and to extract any residual heat from it and also to the bottom floor of the building to provide a positive flow from a fan in the heating apparatus (MVHR) of warmed fresh air across the solid floor with underfloor heating (UFH) fitted to enhance the effectiveness of the heating and to maintain an air flow across the heated floor.

A heating, cooling and ventilating or ventilation system for a building is hereinafter described, by way of example, with reference to the accompanying schematic drawings:
Fig. 1 shows a building incorporating a system according to the invention, and shown winter operation; and
Fig. 2 shows the building of Fig. 1, the system being adapted for summer operation.

Referring to the drawings, in which like parts are identified by like reference numerals, there is shown a heating, cooling and ventilation system 1 installed in a building such as a house 2. The house 2 in the embodiment has two storeys 3, 4 and a roof or loft space 5, the interior spaces of the building being defined by walls 6, a solid floor 7 of a lower space or room 3, an intermediate floor/ceiling 8 separating the lower 3 and an upper room 4, and a ceiling 9 defining with a sloped roof 10 the roof space or loft 5.

The system 1 embodying the invention and shown in the drawings has heating apparatus 11 in the form of pipes installed as underfloor heating in a substrate in the form of the floor 7 of a lower (or lowest) room 3 of the house 2. Thus the pipes 11 may be incorporated in a screeded solid floor such as a concrete floor, though other installations are possible such as the pipes being installed as part of an Overlay™ system or a floating floor construction. The pipes (for hot water (hot being understood to mean warm or any suitable temperature above cold)) could be substituted by electrically heated tiles.

In the loft 5 there is a ventilation device 12 in the form in the embodiment of a mechanical ventilation with heat recovery unit (MVHR). This includes a heat exchanger or heat recovery means (not shown) and, suitably, a fan, also not shown. The device 12 is connected with ambient atmosphere outside the building by passage means, part 13 of which provides incoming fresh ambient air and part 14 of which being for expelling stale air after passage through the device 12. There is also ducting 15, 18 which in the embodiment is installed in the walls 6 and roof 5 of the building 2, and connects the ventilation device 12 with the rooms 3, 4 inlets/outlets 16, 17 such as grilles at or just above floor level and via a port in the room 4 into ducting 18 whereby air passes from the uppermost room 4 to the ventilation unit 12, having been circulated through the house 2.

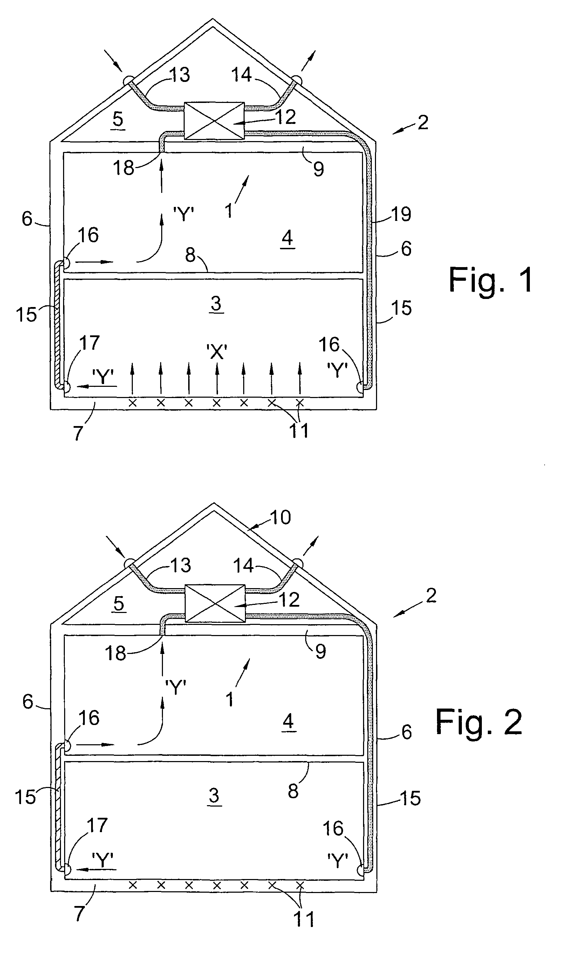

In use, the ducting 15, during winter operation, Fig. 1, allows warm air from the heated floor 7 to be ducted either mechanically (i.e. by forced flow such as a fan) or passively (i.e. by convection) from the lowermost room 3 to the upper floor(s) 4 to provide heating to these floor(s). The warm air is directed into the upper floor room 4 at floor level without the need for radiators or underfloor heating. As shown in Fig. 1, the underfloor heating 11 is ON, the heat emitted being shown by arrows 'X'. This heat is, as described hereinbefore, directed across the floor by pre-warmed fresh air which exits a grille (or slot) at 16 at or just above floor level, to be extracted at 17 and to pass via the ducting to the upper floor 4, at inlet 16.

The pre-warmed fresh air 19 is warmed by the heat exchanger extracting heat from the air exiting the upper floor room and transferring it via the heat exchanger in the heating apparatus 12 to the fresh air which enters via the passage part 13. Spent stale air from the upper room 4 then exists via the passage part 14.

During summer months, or other hot periods, the system 1 acts in such a way that the heating apparatus 12 is operated without the heat recovery function by by-passing the heat exchanger. Moreover, the radiant floor heating 11 in the lowermost room 3 is switched off. Because of thermal mass, the floor in this room will be relatively cool. Fresh air is blown across the floor by the fan in the apparatus 1 via the duct from the apparatus. This air is cooled by contact with the relatively cold floor and this cooled air is then either mechanically or passively ducted to the upper rooms to provide cooling.

The warmed air from the upper room is then extracted by the apparatus and expelled to the outside of the building. Fresh air is drawn in by the apparatus to be positively ducted to the lowermost room.

As a further option, the pipe circuits in a piped radiant floor heating system could be circulated with cold water from a chiller system to enhance the cooling of the solid floor.

The air flows are shown by arrows Y.

## Claims

1. A heating, cooling and ventilating system for a building, comprising heating apparatus installed at a substrate, **characterised by** a ventilation device (12) adapted to handle ambient air from outside the building, by ducting (15), (18) between the heating apparatus (11) and the ventilation device (12), and by the arrangement being such that the ventilation device (12) communicates air from outside the building through the ducting (18) so that air is communicated around the building to one or more rooms (3, 4) for heating or cooling the or each room (3, 4).

2. A system according to Claim 1, **characterised by** the substrate (7) comprising a floor and by the heating apparatus comprising a radiant floor heating system (7, 11).

3. A system according to Claim 2, **characterised by** the floor (7) comprising a base floor of the building (2).

4. A system according to Claim 2 or Claim 3, **characterised by** the radiant floor heating system (7, 11) comprising pipes for passage of water laid in a screeded floor.

5. A system according to Claim 3, **characterised by** the radiant floor heating system (7, 11) comprising pipes for passage of water laid on a floor.

6. A system according to Claim 4 or Claim 5, **characterised by** the pipes (11) comprising flexible plastic hot water pipes.

7. A system according to Claim 2 or Claim 3, **characterised by** the radiant floor heating system (7, 11) comprising an electrical tile heating system.

8. A system according to any preceding claim, **characterised by** the ventilation device (12) comprising a mechanical ventilation unit mounted in an upper part (5) of the building (2).

9. A system according to Claim 8, **characterised by** the ventilation device (12) comprising heat recovery means.

10. A system according to Claim 8 or Claim 9, **characterised by** there being passage means (13, 14) connecting the ventilation device with ambient air, part of the passage means (13) being for admitting ambient air to the ventilation device (12) and part (14) of the passage means being for expelling air to ambient atmosphere after being handled by the device (12).

11. A system according to any preceding claim, **characterised by** the ducting (15, 18) being at one or more walls of the building (2) and providing an air flow connection between the heating apparatus (7, 11) and the ventilation device (12).

12. A system according to Claim 11, **characterised by** the ducting (15, 18) being mounted at, in or recessed behind the walls of the building.

13. A system according to Claim 12, **characterised by** the ducting (15, 18) comprising a sound absorbing material.

14. A system according to any of Claims 11 to 13, **characterised by** the ducting (15, 18) comprising one or more grilles (16, 17) adapted to act as air intakes and outlets.

15. A system according to Claim 14, **characterised by** the or each grille (16, 17) being mounted in a skirting board or wall or floor of the building (2).

16. A system according to any of Claims 11 to 13, **characterised by** the ducting (15, 18) comprising a slot extending substantially over the length of a skirting board and adapted to direct air flow across the full width of the floor.

17. A system according to any of Claims 11 to 13, **characterised by** the ducting (15, 18) comprising part of partitioning forming a wall.

18. A system according to any preceding claim, **characterised by** including a heat pump adapted to provide additional heating.

19. A building, **characterised by** incorporating a system according to any preceding claim.
